# EUROPEAN PATENT SPECIFICATION

(11) **EP 1 897 653 B1**
(45) Date of publication and mention of the grant of the patent: **07.01.2009**
(21) Application number: 06425622.5
(22) Date of filing: 07.09.2006
(51) Int. Cl.: B23K 37/047, B23P 21/00, B62D 65/02

(54) **System for welding motor-vehicle bodies**
System zum Schweissen von Kraftfahrzeugkarosserien
Système pour souder des carrosseries d'automobiles

(43) Date of publication of application: 12.03.2008
(73) Proprietor: COMAU SpA, 10095 Grugliasco (Torino) (IT)
(72) Inventor: Monti, Denny, 10093 Collegno (Torino) (IT); Bossotto, Pierro, 10146 Torino (IT)
(74) Representative: Notaro, Giancarlo

(56) References cited:
- EP-A1- 1 611 991
- GB-A- 2 157 237

## Description

The present invention relates to systems for welding structures constituted by stamped sheet-metal elements, such as motor-vehicle bodies or their sub-assemblies, said systems being designed to operate on a plurality of different types of structure to be welded (for example, bodies of various models of motor vehicle, or bodies of different versions, such as saloons, station wagons, cabriolets, etc., of the same model of motor vehicle, or again, for example, individual sub-assemblies, such as the floor panel or sides, of various models of motor-vehicle body). There are known systems of the type specified above (see, for example, GB-A-2 172 555 and EP-A-0 642 878, filed in the name of the present applicant), which comprise:
- a welding station;
- a conveying line, for carrying through the welding station the structures to be welded or at least part thereof; and
- a plurality of pairs of side frames, which are provided with means for clamping the structures to be welded during welding and can be guided along the conveying line, the clamping means provided on the side frames of each pair being adapted to the configuration of a corresponding type of structure to be welded.

In the above known systems, the side frames are movable on guide means provided at the side of the conveying line, to enable replacement, according to the type of structure to be welded, of the pair of side frames that is located near the welding station. Each side frame is displaceable between one first position, close to the welding station, and at least one second position, remote with respect to the welding station.

In addition, when each pair of side frames is in the aforesaid first position close to the welding station, it is displaceable between an open condition and a closed condition, in the latter of which the respective means of clamping of the side frames are operative for clamping parts of the structure to be welded in a welding configuration in the welding station. The system moreover comprises means for moving the side frames, for their displacement between the respective first and second positions.

In order to facilitate use of various types of side frames, it is likewise known to equip the system with one or more magazines of side frames, each comprising one or more parking stations both upstream and downstream of the welding station, with reference to the direction of advance along the line, each station comprising a guide section designed to support a side frame in a slidable way.

Thanks to the pre-arrangement of the magazines of side frames, it is possible for a station to operate in a flexible way on a large number of various types of structure to be welded.

A welding system according to the preamble of claim 1 is known from EP 1 611 991 A1.

The purpose of the present invention is to improve further the known systems by further increasing their degree of flexibility and the productivity of the line. A further purpose is to provide a system that will be able to achieve the aforesaid objectives with relatively simple and reliable means.

With a view to achieving the above and further purposes, the subject of the invention is a welding system having the features of claim 1.

Thanks to the characteristic referred to above, during operation of the welding station it is possible to guarantee that in any operating condition and in particular whatever the succession of the various types of structure to be welded that advances through the welding station, the system will always be able to find each time the pair of side frames that are necessary in the most advantageous position to enable it to be brought into the working position before the corresponding type of structure to be welded arrives in the station, so as to guarantee that no dead times are required for pre-arrangement of the frames that are necessary in the welding position and so as to able, when a structure of a type different from the one previously welded enters the welding station, to replace the side frames previously used with the new pair of side frames that is necessary in a time not longer than the time of alternation of the bodies to be welded in the station.

The invention will now be described with reference to the annexed plate of drawings, in which:
- Figure 1 is a schematic view of a first example of embodiment of the system according to the invention; and
- Figure 2 is a perspective, once again schematic, view, of a variant of the system of Figure 1.

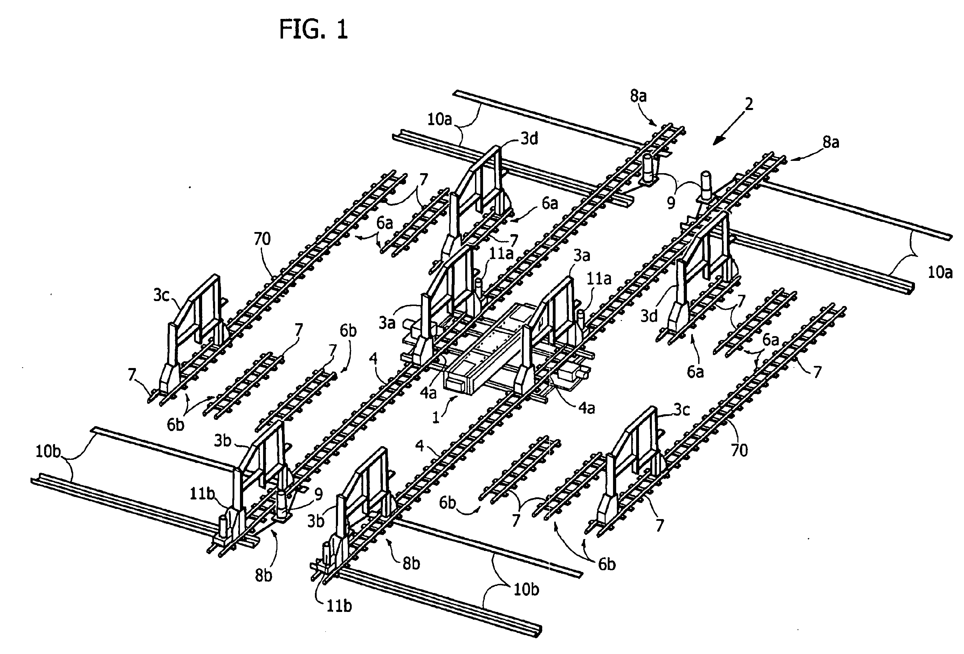

Figure 1 illustrates a welding system for motor-vehicle bodies that to a major extent corresponds to the system known from the preceding European patent application No. EP-A-1 611 991, filed in the name of the present applicant.

The system comprises a welding station 1 set along a conveying line (represented only schematically by the arrow 2), used for carrying the bodies to be welded through the welding station 1. The station 1 is not illustrated in detail in so far as it is of a conception that is as a whole known, with the exception of some of its specific innovative aspects, which will be described in what follows. The welding equipment provided in the station 1 can be constituted by robots of a known type (not illustrated in Figure 1), the control unit of which contains a set of different operating programs, selected each time according to the type of body to be welded.

Given that the conveying line 2 and the means for obtaining displacement of the bodies along it can be of any known type, said elements are not illustrated in the annexed plate of drawings in so far as they do not fall within the scope of the present invention. Their elimination from the drawings moreover renders the latter more immediately understandable. It is evident in any case that the way in which the body to be welded is formed in the welding station can be any whatsoever. For example, the body can be entirely pre-assembled in a provisional way upstream of the welding station. Or else, the various sub-assemblies forming the body can be carried on the conveying line 2 to the welding station in an as yet non-assembled condition, assembly prior to welding being performed in the station itself. Or yet again, the conveying line 2 can carry only part of the body, for example the floor panel, to the welding station, in which case the assembly of the complete body is performed in the welding station, getting the remaining components of the body to arrive there. Again, the system of the invention is of course usable also for welding individual sub-assemblies of body, or again in theory for any other type of welded sheet-metal structure that is to be produced in various types or models or versions. Whatever the way in which the body is assembled, it is necessary to clamp each part of the body in a precise position when the body undergoes the operations of welding in the station 1. Said clamping is obtained by means of tools for positioning and clamping, carried by pairs of side frames that are operatively interchangeable with one another, designated by 3a, 3b, 3c and 3d in Figure 1, which can run on longitudinal bottom rails or guides 4; where not strictly necessary for a detailed description of the operation of the system according to the invention, the side frames 3a, 3b, 3c, and 3d will in what follows be identified just by the reference number 3.

In the case exemplified, the guides 4 extend parallel to the line 2 for conveying the bodies and are fixed directly to the floor, with the exception of their respective intermediate portion, designated by 4a, located in a position corresponding to the welding station 1. As will emerge clearly from what follows, the portions 4a of the guides 4 can be translated in a direction substantially perpendicular to the longitudinal development of the guides themselves, for carrying the side frames 3 of the pair in use into the welding station 1 in the respective closed condition.

The pairs of frames 3 can be displaced along the guides 4 so as to carry into a position corresponding to the welding station 1 a pair of side frames corresponding to the type of body to be welded. When a body of a type different from the one on which the welding station has been operating immediately before reaches the station 1, the pair of side frames that is located in the station can be rapidly replaced by sliding on the respective guides 4, as will emerge from what follows.

To increase the flexibility of the welding station and in particular increase the number of different types of body on which the station is able to operate, in the case exemplified, two magazines of frames are provided, situated, respectively, upstream and downstream of the welding station, with reference to the direction of advance along the line 2. Each of the two magazines of frames comprises a series of stations 6a and 6b, arranged at the two sides of the conveying line 2 and of the guides 4, where each station comprises a guide section 7 having a shape similar to the guides 4 and thus designed to support a corresponding side frame in a slidable way. In the case exemplified, the guide sections 7 extend substantially parallel to the guides 4.

In the example illustrated, both the magazine upstream and the magazine downstream have two sections of magazine at the two sides of the conveying line 2, each comprising three different stations 6a, 6b, which corresponds to a maximum total number of six different types of frames 3 that are to operate on as many types of body. Of course, in any case, the two magazines can be provided with any number of parking stations, with the limits that will be illustrated in what follows.

The various frames 3 carry, in a way in itself known, respective positioning tools for clamping (not illustrated), designed to engage the side and top parts of the body, in such a way as to clamp it in a precise position during execution of the operations of welding in the station 1. The bottom part of the body is instead clamped by means of further positioning tools for clamping, prearranged on the bottom part of the welding station 1. Each pair of side frames 3 is in particular provided with positioning tools for clamping suited to the particular configuration of a respective type of body.

During use of the system, positioned each time on the guides 4 are a first pair of side frames 3, in the working position, corresponding to the type of body that is located each time in the welding station 1, and a second pair of frames 3, in a waiting position, corresponding to the type of the body to be welded immediately after. When the latter body enters the welding station 1, the first frames 3 are carried into a waiting position and the second frames 3 into the working position by means of a simultaneous movement in the longitudinal direction along the guides 4.

Provided in a position corresponding to the two longitudinal ends of the guides 4 are respective translatable guide elements 8a, 8b having a shape similar to that of the guides 4. The translatable guide elements 8a, 8b are equipped with respective motor-drive means 9 in order to be able to displace laterally, for example on respective pairs of rails 10a, 10b, in a direction perpendicular to the longitudinal development of the guides 4, between a first position and a plurality of second positions. In the aforesaid first position, each translatable guide element 8a, 8b is longitudinally aligned to a respective guide 4 so as to constitute a sort of prolongation thereof. By means of the aforesaid lateral displacement, each stretch 8a, 8b can be brought into a position corresponding to a respective parking station 6a, 6b, i.e., to a guide section 7.

Moving of the side frames 3 of the various pairs can be obtained in various ways. In a first embodiment, which corresponds to what is illustrated in Figure 1, moving of the side frames 3 of the various pairs is obtained by means of independent tractors, each of which is able to co-operate with different side frames 3 in order to pick them up from a respective station 6a and 6b and bring them into the operating position in a position corresponding to the station 1 and vice versa. In the case illustrated in Figure 1, two pairs of tractors are provided, designated by 11a and 11b, which are selectively coupleable to the various side frames.

The welding system described above corresponds to what is illustrated in the preceding European patent application No. EP-A-1 611 991, filed in the name of the present applicant. The general operation of said system is described in what follows. We shall assume that in the welding station 1 is a body of a first type referred to as type A, parts of which are clamped in a precise position during the operations of welding by positioning tools carried by the pair of side frames 3a. The body that is located in the welding station 1 is to be followed by a body of a second type, referred to as type B, where the positioning tools prearranged for clamping the various parts of the body of type B during execution of welding are prearranged on the pair of the side frames 3b. Likewise, we shall assume that the body of type B is followed by a body of a third type C, and this in turn by a body of a fourth type D, to each of which is associated a respective type of side frames 3c and 3d.

The replacement of one body in the welding station 1 with a body of a different type is accompanied by a corresponding replacement of the pairs of side frames to be used by the station itself, along the guides 4, in such a way as to bring one pair of side frames 3 into a waiting position and the other pair of frames 3 into the operating position, corresponding to the welding station.

Once each pair of side frames has reached the operating position, it is displaceable between an open condition, to enable entrance into the welding station 1 of the new body to be welded, and a closed position, in which the positioning tools of the side frames engage the side and top parts of the body to clamp them in a precise position. As previously mentioned, the aforesaid movement is obtained via translation of the portions 4a of the guides 4. The clamping of the frames 3 in the closed condition, with respect to the welding station, is obtained via means in themselves known.

In Figure 1, the bodies that advance along the line are not illustrated for reasons of clarity. As long as bodies of type A and B advance along the line, they are welded each time after prior longitudinal sliding of the two pairs of side frames 3a and 3b in such a way that each time one of said pairs reaches the operating position, and the other pair is brought into a waiting position, respectively upstream and downstream of the welding station. In the situation illustrated in Figure 1, located in the operating position are the two side frames 3a, which means that the body that is located in the welding position is a body of type A. If, for example, after said body, a body of type C is to be welded, the two side frames 3b do not remain stationary in a waiting position, but instead advance longitudinally along the guides 4 up to the position illustrated in Figure 1. In said condition, the guide sections 8b displace transversely along the guides 10b until they come into alignment with respective guides 7 of two stations 6b of the magazines. In this way, the side frames 3b can be brought into an inoperative position in the magazine, after which the guide sections 8b are aligned with the sections 7, on which they await the two side frames 3c. The latter can thus be taken on board the guide sections 8b, which displace once again transversely until they are aligned with the guides 4. In this way, the two side frames 3c can move into the waiting position, immediately downstream of the welding station, so that, at the end of welding of the body of type A, they will be ready to translate longitudinally along the guides 4 and move into the operating position for intervention on the body of type C, which is entering the welding station.

As has already been said, the structure and operation described above are known from the preceding patent application No. EP-A-1 611 991, filed in the name of the present applicant. The embodiment of the present invention illustrated in Figure 1 differs from what is known from the preceding application in that, in the case illustrated, the magazines upstream and downstream provided in the welding system are connected directly together by means of guide sections 70. In the specific case illustrated, just two guide sections 70 are provided, which connect together two guide sections 7 on the two sides of the welding station. It is not ruled out, however, that a greater number of connection sections 70 can be provided for connecting together more than two guide sections 7. As may be seen, the pre-arrangement of the guide sections 70 that connect directly together guide sections 7 belonging to magazines arranged upstream and downstream of the welding station enables conveying of a side frame from a magazine upstream of the station directly to the magazine downstream, or vice versa, without the need to pass the side frame through the longitudinal guides 4 arranged at the two sides of the welding station. In other words, guide lines 70 are provided that constitute a by-pass with respect to the longitudinal guides 4. Said solution enables the productivity of the system to be raised considerably and in particular guarantees once again the possibility of positioning a pair of side frames rapidly in the operating position, in whichever magazine station said side frames are arranged.

Figure 1 refers to the case where, as in the preceding patent application filed in the name of the present applicant, moving of the side frames is obtained by means of independent tractors 11a, 11b, which are able to move on the guides 4 and on the guide sections 7 and are able to engage with the side frames.

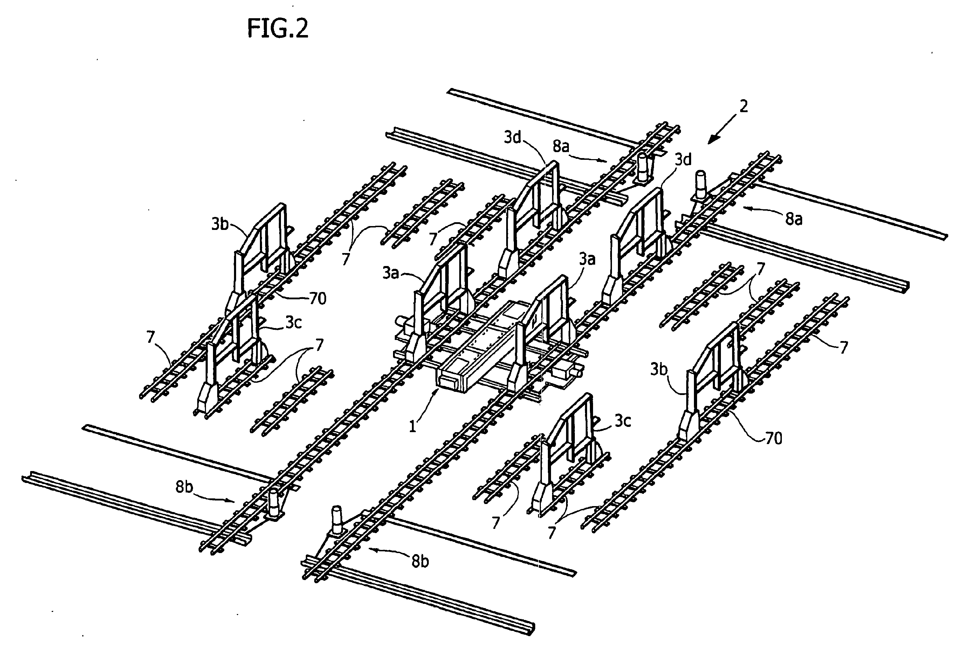

Figure 2 illustrates a similar welding station, in which each side frame is provided with an autonomous motor drive of its own. Also in the case of Figure 2, the robots R that carry the welding heads that are needed for carrying out the operations of welding on the body that each time is located in the welding station are not illustrated, and nor are the bodies that advance through the station illustrated. Figure 2 illustrates in particular a condition in which located along the guides 4 at the two sides of the line are two pairs of side frames and in which all the remaining types of side frames are located, positioned in the magazine downstream of the welding station. In the case of the example illustrated in Figure 2, there are once again provided a total of four pairs of side frames that are to operate on four different types of body. At the instant illustrated in Figure 2, located in the welding station is a body of type A, engaged by the pair of frames 3a, whilst the pair of side frames 3d are waiting. The magazine upstream is completely empty, and the side frames 3b that were in the magazine downstream, are in the course of transfer, via the guide sections 70, from the magazine downstream to the magazine upstream.

Figure 2 differs then from Figure 1 in that, in the system illustrated therein, no frame 3 is carried by a self-driven trolley.

As may be seen, the principle that underlies the present invention is that of creating a direct connection between the magazine upstream of the welding station and the magazine downstream of the welding station, so as to make it possible to carry side frames positioned in one of said magazines into the other magazine directly, and vice versa, without passing through the guides 4 arranged at the two sides of the welding station.

Of course, without prejudice to the principle of the invention, the details of construction and the embodiments may vary widely with respect to what is described and illustrated herein, without thereby departing from the scope of the present invention as defined in the claims.

In particular, the structure, conformation, and operation of the welding station can also be different from the ones illustrated above, and the same also applies to the number, conformation, and arrangement of the magazines of side frames.

## Claims

1. A system for welding structures constituted by elements of stamped sheet metal, such as motor-vehicle bodies or their sub-assemblies, designed to operate automatically on a plurality of different types of structures to be welded, of the type comprising:
- a welding station (1);
- a conveying line (2) for carrying through the welding station (1) the structures to be welded or at least part thereof;
- a plurality of pairs of side frames (3a, 3b, 3c, 3d), which are provided with means for clamping the structures to be welded and can be guided along the conveying line (2), the clamping means provided on the side frames (3a, 3b, 3c, 3d) of each pair being adapted to the configuration of a corresponding type of structure to be welded,
wherein the side frames (3a, 3b, 3c, 3d) are movable on guide means (4, 4a, 8a, 8b), provided at the side of the conveying line (2), to enable replacement, according to the type of structure to be welded, of the pair of side frames (3a, 3b, 3c, 3d) that is located at the welding station (1), each side frame (3a, 3b, 3c, 3d) being displaceable between a working position, close to the welding station (1) and two waiting positions, located upstream and downstream of the welding station on the two sides of the conveying line (2),
wherein, when each pair of side frames (3a, 3b, 3c, 3d) is located in said first position close to the welding station, it is moreover displaceable between an open position and a closed position, in which the respective side frames are operative for clamping parts of the structure to be welded in a welding configuration on the welding station (1),
the system moreover comprising means (11a, 11b) for moving the side frames (3a,3b,3c,3d) for their displacement between the respective working and waiting positions,
wherein there are provided one or more magazines of frames, each comprising one or more parking stations (6a,6b), both upstream and downstream of the welding station, each parking station (6a, 6b) comprising a guide section (7) designed to support a side frame in a slidable way (3a, 3b, 3c, 3d) in its second position,
the system moreover comprising means (11a,11b, 8a,8b) for moving the side frames (3a,3b,3c,3d) for their displacement between the waiting position upstream of the welding station and a position remote with respect to the welding station (1), at one of the parking stations (6a) located upstream of the welding station, and between the waiting position downstream of the welding station and a position remote with respect to the welding station (1), at one of the parking stations (6b) located downstream of the welding station,
said system being **characterized in that** auxiliary guide means (70) are provided that connect directly at least one guide section (7) of one parking position (6a) of the magazine associated to the waiting position upstream of the welding station with a guide section (7) of one parking position (6b) of the magazine associated to the waiting position downstream of the welding station, in such a way as to enable transfer of pairs of side frames (3) directly from the magazine upstream to the magazine downstream, or vice versa, without passing them through the welding station.

2. The welding system according to Claim 1, **characterized in that** said means for moving comprise a plurality of tractors (11a, 11b), which are autonomous with respect to said side frames (3a, 3b, 3c, 3d), each tractor (11a, 11b) being selectively coupleable automatically to side frames of different pairs, in order to displace the latter.

3. The welding system according to Claim 1, **characterized in that** said means for moving comprise motor means associated to each side frame (3).

## Patentansprüche

1. Anlage zum Schweißen von Strukturen, die durch Elemente aus gestanztem Blech gebildet sind, wie z.B. Kraftfahrzeugkarosserien oder deren Baugruppen, die geeignet ist, automatisch eine Vielzahl verschiedener Typen von zu schweißenden Strukturen zu bearbeiten, von dem Typ, der umfasst:
- eine Schweißstation (1);
- ein Förderband (2), um die zu schweißenden Strukturen oder mindestens Teile davon durch die Schweißstation (1) zu befördern;
- eine Vielzahl von Seitenrahmenpaaren (3a, 3b, 3c, 3d), die mit Mitteln zum Einspannen der zu schweißenden Strukturen versehen sind und die entlang dem Förderband (2) geführt werden können, wobei die Einspannmittel, die an den Seitenrahmen (3a, 3b, 3c, 3d) jedes Paares vorgesehen sind, an die Konfiguration eines entsprechenden Typs der zu schweißenden Struktur angepasst sind,
wobei die Seitenrahmen (3a, 3b, 3c, 3d) auf Führungsmitteln (4, 4a, 8a, 8b) beweglich sind, die an der Seite des Förderbands (2) vorgesehen sind, um entsprechend dem Typ der zu schweißenden Struktur einen Austausch des Seitenrahmenpaares (3a, 3b, 3c, 3d) zu ermöglichen, das an der Schweißstation (1) angeordnet ist, wobei jeder Seitenrahmen (3a, 3b, 3c, 3d) zwischen einer Arbeitsposition nahe der Schweißstation (1) und zwei Wartepositionen beweglich ist, die sich stromaufwärts und stromabwärts von der Schweißstation an den beiden Seiten des Förderbands (2) befinden,
wobei, wenn sich jedes Seitenrahmenpaar (3a, 3b, 3c, 3d) in der ersten Position nahe der Schweißstation befindet, dieses darüber hinaus zwischen einer geöffneten Position und einer geschlossenen Position beweglich ist, in der die jeweiligen Seitenrahmen betriebsbereit für Einspannteile der Struktur sind, die in einer Schweißkonfiguration in der Schweißstation (1) zu schweißen ist,
wobei die Anlage darüber hinaus Mittel (11a, 11b) umfasst, um die Seitenrahmen (3a, 3b, 3c, 3d) im Hinblick auf ihre Bewegung zwischen der Arbeitsposition bzw. den Wartepositionen anzutreiben,
wobei ein oder mehrere Rahmenmagazine vorgesehen sind, wobei jedes sowohl stromaufwärts als auch stromabwärts von der Schweißstation eine oder mehrere Parkstationen (6a, 6b) umfasst, wobei jede Parkstation (6a, 6b) einen Führungsabschnitt (7) umfasst, der geeignet ist, einen Seitenrahmen auf gleitbare Weise (3a, 3b, 3c, 3d) in seiner zweiten Position zu halten,
wobei die Anlage darüber hinaus Mittel (11a, 11b, 8a, 8b) umfasst, um die die Seitenrahmen (3a, 3b, 3c, 3d) im Hinblick auf ihre Bewegung zwischen folgenden Positionen anzutreiben: zwischen der Warteposition stromaufwärts von der Schweißstation und einer in Bezug auf die Schweißstation (1) beabstandeten Position an einer der stromaufwärts von der Schweißstation angeordneten Parkstationen (6a), und zwischen der Warteposition stromabwärts von der Schweißstation und einer in Bezug auf die Schweißstation (1) beabstandeten Position an einer der stromabwärts von der Schweißstation angeordneten Parkstationen (6b),
wobei die Anlage **dadurch gekennzeichnet ist, dass** zusätzliche Führungsmittel (70) vorgesehen sind, die mindestens einen Führungsabschnitt (7) einer Parkposition (6a) des Magazins, das der Warteposition stromaufwärts von der Schweißstation zugeordnet ist, direkt mit einem Führungsabschnitt (7) einer Parkposition (6b) des Magazins verbinden, das der Warteposition stromabwärts von der Schweißstation zugeordnet ist, und zwar derart, dass der Transport von Seitenrahmenpaaren (3) direkt vom stromaufwärts befindlichen Magazin zum stromabwärts befindlichen Magazin oder umgekehrt ermöglicht wird, ohne sie durch die Schweißstation zu befördern.

2. Schweißanlage nach Anspruch 1, **dadurch gekennzeichnet, dass** die Antriebsmittel eine Vielzahl von Zugorganen (11a, 11b) umfassen, die in Bezug auf die Seitenrahmen (3a, 3b, 3c, 3d) unabhängig sind, wobei jedes Zugorgan (11a, 11b) automatisch und selektiv mit Seitenrahmen unterschiedlicher Paare koppelbar ist, um die Letztgenannten zu bewegen.

3. Schweißanlage nach Anspruch 1, **dadurch gekennzeichnet, dass** die Antriebsmittel Motormittel umfassen, die mit jedem Seitenrahmen (3) verbunden sind.

## Revendications

1. Un système pour souder des structures constituées d'éléments d'une feuille métallique estampée, telles que des carrosseries de véhicule automobile ou leurs sous-ensembles, conçu pour opérer automatiquement sur une pluralité de types différents de structures à souder, du type comprenant :
- un poste de soudage (1) ;
- une ligne de convoyage (2) pour transporter au travers du poste de soudage (1) les structures devant être soudées ou au moins une partie de celles-ci ;
- une pluralité de paires de cadres latéraux (3a, 3b, 3c, 3d), qui sont pourvus de moyens pour pincer les structures à souder et peuvent être guidés le long de la ligne de convoyage (2), les moyens de pincement prévus sur les cadres latéraux (3a, 3b, 3c, 3d) de chaque paire étant adaptés à la configuration d'un type correspondant de structure à souder,
dans lequel les cadres latéraux (3a, 3b, 3c, 3d) sont mobiles sur des moyens de guidage (4, 4a, 8a, 8b) prévus sur le côté de la ligne de convoyage (2), pour permettre le remplacement, en fonction du type de structure à souder, de la paire de cadres latéraux (3a, 3b, 3c, 3d) qui est située au poste de soudage (1), chaque cadre latéral (3a, 3b, 3c, 3d) étant déplaçable entre une position de travail à proximité du poste de soudage (1) et des positions d'attente situées en amont et en aval du poste de soudage des deux côtés de la ligne de convoyage (2),
dans lequel, lorsque chaque paire de cadres latéraux (3a, 3b, 3c, 3d) est située dans ladite première position à proximité du poste de soudage, elle est en outre déplaçable entre une position ouverte et une position fermée,
dans laquelle les cadres latéraux respectifs peuvent être mis en oeuvre pour pincer des parties de la structure devant être soudée dans une configuration de soudage du poste de soudage (1),
le système comprenant en outre des moyens (11a, 11b) pour déplacer les cadres latéraux (3a, 3b, 3c, 3d) pour leur déplacement entre les positions de travail et d'attente respectives,
dans lequel il est prévu un ou plusieurs magasins de cadres, chacun comprenant un ou plusieurs postes de parcage (6a, 6b), à la fois en amont et en aval du poste de soudage, chaque poste de parcage (6a, 6b) comprenant une section de guidage (7) conçue pour supporter un cadre latéral de manière coulissante (3a, 3b, 3c, 3d) dans sa seconde position,
le système comprenant en outre des moyens (11a, 11b, 8a, 8b) pour déplacer les cadres latéraux (3a, 3b, 3c, 3d) pour leur déplacement entre la position d'attente en amont du poste de soudage et une position distante par rapport au poste de soudage (1), à l'endroit de l'un des postes de parcage (6a) situé en amont du poste de soudage, et entre la position d'attente en aval du poste de soudage et une position distante par rapport au poste de soudage (1), à l'endroit de l'un des postes de parcage (6b) situé en aval du poste de soudage,
ledit système étant **caractérisé en ce qu'**il est prévu des moyens de guidage auxiliaires (70) qui relient directement au moins une section de guidage (7) d'une position de parcage (6a) du magasin associé à la position d'attente en amont du poste de soudage avec une section de guidage (7) d'une position de parcage (6b) du magasin associé à la position d'attente en aval du poste de soudage, d'une manière telle qu'elle permette le transfert de paires de cadres latéraux (3) directement depuis le magasin amont vers le magasin aval, ou vice versa, sans les faire passer au travers du poste de soudage.

2. Le système de soudage selon la revendication 1, **caractérisé en ce que** lesdits moyens pour déplacer comprennent une pluralité de tracteurs (11a, 11b) qui sont autonomes par rapport auxdits cadres latéraux (3a, 3b, 3c, 3d), chaque tracteur (11a, 11b) étant sélectivement couplable automatiquement aux cadres latéraux de paires différentes, afin de déplacer ces dernières.

3. Le système de soudage selon la revendication 1, **caractérisé en ce que** lesdits moyens pour déplacer comprennent des moyens motorisés associés à chaque cadre latéral (3).
